**Europäisches Patentamt**

**European Patent Office**

**Office européen des brevets**

(19)

(11) Veröffentlichungsnummer: **0 224 822**
**B1**

(12) # EUROPÄISCHE PATENTSCHRIFT

(45) Veröffentlichungstag der Patentschrift:
08.08.90

(51) Int. Cl.⁵: **B23K 9/12**

(21) Anmeldenummer: 86116178.4

(22) Anmeldetag: 21.11.86

(54) Transportvorrichtung für den Schweissdrahtvorschub an Schweisseinrichtungen.

(30) Priorität: 29.11.85 DE 3542314

(43) Veröffentlichungstag der Anmeldung:
10.06.87 Patentblatt 87/24

(45) Bekanntmachung des Hinweises auf die Patenterteilung:
08.08.90 Patentblatt 90/32

(84) Benannte Vertragsstaaten:
AT BE CH DE FR GB IT LI NL SE

(56) Entgegenhaltungen:
AT-B- 373 186
DD-A- 111 036
DD-A- 225 367
DE-A- 2 938 345

(73) Patentinhaber: KUKA Schweissanlagen & Roboter
GmbH, Blücherstrasse 144, D-8900 Augsburg(DE)

(72) Erfinder: Kainz, Franz, Herzogstandstrasse 19c,
D-8900 Augsburg(DE)
Erfinder: Mazac, Karel, Dahlienweg 1,
D-8904 Friedberg(DE)
Erfinder: Obermeier, Helmut, Nördlingerstrasse 20,
D-8901 Königsbrunn(DE)
Erfinder: Rippl, Peter, Dr.,
Friedrich-Deffner-Strasse 19 b, D-8900 Augsburg(DE)
Erfinder: Stadler, Josef, Schlössleweg 6,
D-8904 Friedberg/Wulfertshausen(DE)
Erfinder: Zimmer, Ernst, Michael-Steinherr Strasse 34,
D-8904 Friedberg(DE)

(74) Vertreter: Ernicke, Hans-Dieter, Dipl.-Ing. et al,
Schwibbogenplatz 2b, D-8900 Augsburg(DE)

## Beschreibung

Die Erfindung betrifft eine Transportvorrichtung für den Schweißdrahtvorschub an Schweißeinrichtungen, mit den Merkmalen im Oberbegriff des Hauptanspruches.

Bei Schweißeinrichtungen, insbesondere automatischen Schweißmaschinen oder Schweißrobotern, besteht das Problem, daß der Schweißdraht trotz der vielfältigen Bewegungen des Schweißwerkzeuges ständig mit der gleichen Geschwindigkeit und der gleichen Kraft der Schweißdüse zugeführt werden und aus dieser austreten muß. Dieses Problem stellt sich insbesondere für Lichtbogen-Schutzgas-Schweißeinrichtungen. Der Schweißdraht wird von einem Vorratsbehälter, meistens einer Rolle, abgezogen und über eine längere Führungsstrecke zur Schweißdüse transportiert. Beim Bahnschweißen muß die Schweißdüse oftmals komplizierten Bahnen im Raum folgen, wobei auch die Schweißdrahtführung mitbewegt wird. Diese Richtungsänderungen der Schweißdrahtführung erschweren die Drahtförderung und führen auch bei schnellen Bewegungen der Schweißdüse zu Schwingungen im Drahtvorschubsystem. Diese Faktoren bewirken, daß der Drahtvorschub nicht mehr konstant erfolgt und daß somit die Schweißqualität leidet.

Aus der DD-C 111 036 ist eine Transportvorrichtung mit zwei Antrieben bekannt, die auf konstante Drehzahl geregelt sind. Der den Vorschub bestimmende Antrieb sitzt nahe der Schweißdüse, während der Hilfsantrieb in der Nähe der Vorratsrolle für den Schweißdraht angeordnet ist. Bei der vorbekannten Transportvorrichtung soll mechanischer Schlupf am Hilfsantrieb vermieden werden. Stattdessen wird ein sogenanntes elektrisches Gleiten des Systems angestrebt, wobei der Hilfsantrieb ständig seine Geschwindigkeit ändert. Er erhält hierzu vom Regler des Hauptantriebes Steuersignale, falls dieser zur Überwindung temporär höherer Widerstandskräfte in der Schweißdrahtführung eine höhere Stromaufnahme hat. Bei dieser Anordnung kann es zu Regelschwingungen kommen, die einen konstanten Drahtvorschub an der Schweißdüse verhindern.

Die AT-A 373 186 zeigt eine ähnliche Transportvorrichtung mit ebenfalls zwei drehzahlgeregelten Antrieben. Auch hier verändert der Hilfsantrieb seine Geschwindigkeit auf ein Steuersignal des Hauptantriebes. Haupt- und Hilfsantrieb greifen ohne Schlupf am Draht an.

Die DD-A1 225 367 zeigt eine Transportvorrichtung mit einem einzigen Antrieb, der eine Drahtbremse aufweist.

Für handgeführte Brenner ist es in der Praxis ebenfalls bekannt, zwei voneinander unabhängige Antriebe zur Förderung des Schweißdrahtes zu verwenden. Der hintere, in der Nähe der Drahtrolle angeordnete Antrieb ist als Hauptantrieb ausgebildet, der im wesentlichen den Drahtvorschub bestimmt. Der vordere Antrieb ist in der Nähe der Schweißdüse angesiedelt und als klein bauender Hilfsantrieb in den Brennergriff integriert. Damit werden hauptsächlich knickgefährdete Schweißdrähte aus weichen Materialien gefördert.

In der Praxis hat sich gezeigt, daß die bekannte Transportvorrichtung den gestellten Anforderungen an eine konstante Schweißdrahtzuführung nicht genügen kann. Außerdem entstehen hohe Motorbelastungen, die die Lebensdauer dieser Vorrichtung herabsetzen.

Es ist daher Aufgabe der vorliegenden Erfindung, eine Vorrichtung aufzuzeigen, mit der auch auf längere Dauer ein nach Geschwindigkeit und Kraft konstanter Schweißdrahtvorschub sichergestellt werden kann.

Die Erfindung löst diese Aufgabe mit den Merkmalen des Hauptanspruchs.

Mit der erfindungsgemäßen Transportvorrichtung kann der Schweißdraht nunmehr den gestellten Anforderungen entsprechend zugeführt werden. Dabei wird auch bei Nahtverfolgungssystemen eine maximal mögliche Prozeßstabilität hergestellt. Außerdem wird für eine hohe Einschaltdauer (in der Regel 100%) das gesamte Zuführsystem optimiert.

Der Hauptantrieb, der letztendlich Kraft und Geschwindigkeit des Schweißdrahtvorschubes bestimmt, ist nahe der Schweißdüse angeordnet. Die tatsächliche Entfernung zur Schweißdüse richtet sich danach, welche möglichen Hindernisse noch zwischen dem Hauptantrieb und der Schweißdüse im Führungsverlauf auf den Schweißdraht einwirken können und variiert insofern mit den jeweiligen maschinellen Gegebenheiten. Bei der Verwendung von Schweißrobotern empfiehlt es sich, den Hauptantrieb am letzten bewegten Glied der Roboterhand anzuordnen.

Der Vorratsbehälter für den Schweißdraht, meistens eine Rolle, kann an der Schweißeinrichtung oder davon getrennt extern angeordnet sein. Je nach der Länge der Transportstrecke vom Vorratsbehälter bis zur Schweißeinrichtung werden ein oder mehrere Hilfsantriebe eingesetzt.

Die Antriebsmotoren des Hauptantriebs und der Hilfsantriebe sind unabhängig voneinander auf konstante Drehzahl geregelt.

Außerdem sind die Antriebe, insbesondere bei der Verwendung der Transportvorrichtung in Verbindung mit Schweißrobotern, die sehr schnelle und ständig wechselnde Bewegungen ausführen, auf unterschiedliche Fördergeschwindigkeiten eingestellt. In den gezeigten Ausführungsbeispielen werden vorzugsweise die Hilfsantriebe auf einen Schubbetrieb mit höherer Fördergeschwindigkeit als der Hauptantrieb eingestellt. Es ist aber auch möglich, die Hilfsantriebe im Zugbetrieb mit geringerer Geschwindigkeit als den Hauptantrieb laufenzulassen. Für die Verwendung an Schweißrobotern hat es sich als günstig erwiesen, die Fördergeschwindigkeit der Hilfsantriebe um ca. 10 - 40% höher zu wählen als diejenige des Hauptantriebes.

Wesentlich ist, daß jeder Hilfsantrieb mit Schlupf arbeitet. Dieser Schlupf kann, je nach Ausbildung der Antriebe, regelbar sein.

Der Schlupf des einzelnen Hilfsantriebs sorgt dafür, daß die Kraft, mit der der Schweißdraht dem Hauptantrieb von hinten zugeführt wird, einen vorgewählten Maximalwert nie überschreitet. Dies wäre z.B. der Fall, wenn in gewissen Bewegungsstellungen der Schweißdüse die Reibungswiderstände in der Schweißdrahtführung minimal werden.

Andererseits sorgen die Hilfsantriebe beim Ansteigen dieser Reibungskräfte durch stärkere Krümmung der Schweißdrahtführung oder dgl. dafür, daß diese Kräfteschwankungen egalisiert werden und den Hauptantrieb nicht beeinflussen. Hierzu empfiehlt es sich, die Schlupfgrenze auf eine Kraft einzustellen, die zumindest gleich oder größer als die zu ewartenden, maximalen, der Drahtförderung entgegenwirkenden Reibkräfte oder dgl. Widerstände ist. Auf diese Weise ist sichergestellt, daß der Schweißdraht am Hauptantrieb stets mit ungefähr gleichgroßer und gleichgerichteter Kraft ansteht und daß die Zuführkräfte nicht von Zug auf Druck oder umgekehrt umschlagen.

Die Transportvorrichtung kann im Sinne des Hauptanspruches mit unterschiedlichen Antriebssystemen für Hauptantrieb und Hilfsantriebe ausgerüstet sein. Die Verwendung eines Planetenvorschubgerätes für den einzelnen Hilfsantrieb hat außer der einfachen Gestaltung und der leichten Einstellbarkeit des Schlupfes auch den Vorteil, daß der Schweißdraht beim Durchlaufen des Hilfsantriebes gerichtet und umfangsseitig von Beschmutzungen befreit wird. Auf diese Weise ist es möglich, ohne weitere Vorkehrungen auch qualitativ schlechtere Schweißdrähte zu verarbeiten. Das Planetenvorschubgerät bringt auch Vibrationseffekte in der Schweißdrahtführung mit sich, die sich günstig auf einen gleichmäßigen Drahtvorschub auswirken und außerdem das Einfädeln eines neuen Schweißdrahtes erleichtern. Für den Hauptantrieb empfiehlt sich aus Platz- und Gewichtsgründen ein Zweirollen-Drahtantrieb, bei dem vorzugsweise beide Rollen angetrieben sind. Es ist aber auch möglich, nur eine Rolle anzutreiben. Um eine möglichst schnelle und steife Regelung auf konstante Drehzahl zu erreichen, ist es günstig, tachogeregelte Gleichstrommotoren mit Fremderregung zu verwenden. Es ist aber auch möglich, beliebige andere Antriebsmotoren, beispielsweise Scheibenläufer, einzusetzen oder eine andere Art der Drehzahlregelung vorzusehen.

Die erfindungsgemäße Transportvorrichtung läßt sich in Verbindung mit den unterschiedlichsten Schweißeinrichtungen, z.B. auch handgeführten Schweißapparaten, verwenden. Sie eignet sich jedoch insbesondere für den Einsatz an Schweißautomaten, Schweißrobotern und dgl.

Vor allem in Verbindung mit Schweißrobotern ermöglicht die Erfindung eine externe Bevorratung des Schweißdrahtes und eine Mehrfachversorgung der Schweißroboter. Der Schweißdraht wird dann von einer zentralen Vorratsstelle aus über eine längere Strecke mit mehreren Hilfsantrieben den einzelnen Schweißrobotern zugeführt. Dies hat auch den Vorteil, daß der Schweißdraht in beliebig großen Längen auf Rollen aufgewickelt sein kann. Bisher war der Drahtvorrat durch das vom Schweißroboter maximal tragbare Rollengewicht beschränkt. Mit der Erfindung werden zudem die Rüstzeiten verringert.

Die Erfindung ist in den Zeichnungen beispielsweise und schematisch dargestellt. Im einzelnen zeigen

Fig. 1 eine Transportvorrichtung für eine Schweißeinrichtung an einem Industrieroboter,

Fig. 2 eine vergrößerte Ansicht des Hauptantriebes der Transportvorrichtung gemäß Fig. 1,

Fig. 3 eine Ansicht des Hauptantriebs in Pfeilrichtung III von Fig. 2,

Fig. 4 eine vergrößerte Ansicht des Hilfsantriebes gemäß Fig. 1,

Fig. 5 einen Schnitt durch den Hilfsantrieb von Fig. 4 entlang Schnittlinie V-V und

Fig. 6 eine Anordnung von mehreren Schweißrobotern mit einer externen Mehrfachversorgung.

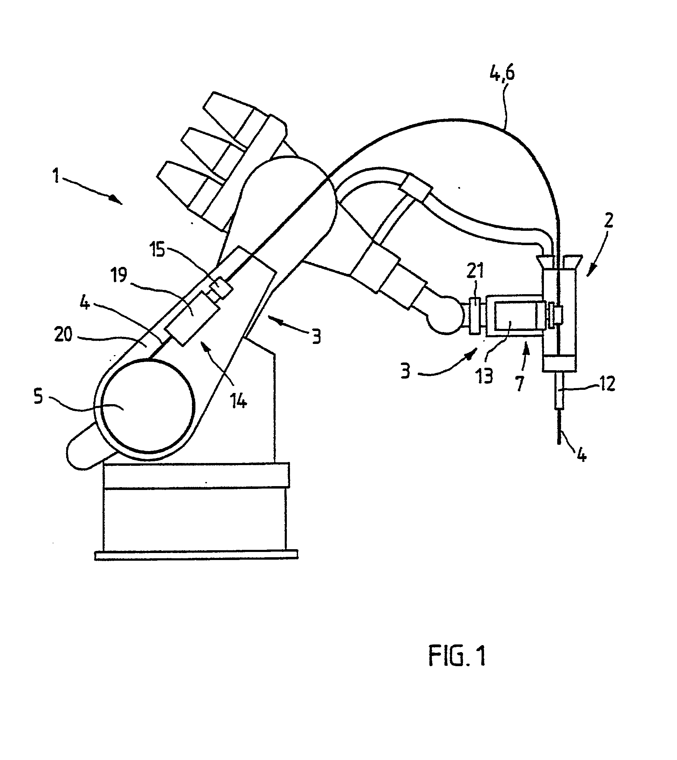

Fig. 1 zeigt einen sechsachsigen Industrieroboter (1), der an seiner Hand (21) eine Schweißeinrichtung (2), hier in Form eines Lichtbogen-Schutzgas Schweißwerkzeuges, führt. An der Schweißdüse (12) tritt der Schweißdraht (4) aus, der von einer Drahtrolle (5) an der Schwinge (20) über eine Transportvorrichtung (3) zugeführt wird.

Die Transportvorrichtung (3) besteht aus einem Hilfsantrieb (14) und einem Hauptantrieb (7). Der Hilfsantrieb (14) sitzt in der Nähe der Drahtrolle (5) an der Schwinge (20) des Industrieroboters (1) und schiebt den Schweißdraht (4) durch eine frei im Raum verlegte Schweißdrahtführung (6) in Form eines elastischen Schlauches zum Hauptantrieb (7), der an der Hand (21) des Industrieroboters (1) angeordnet ist.

Der Industrieroboter (1) ist in der Lage, mit der Schweißdüse (12) Bahnschweißungen vorzunehmen und bewegt dazu die Schweißdüse (12) auf manchmal komplizierten Bahnen durch den Raum, wobei sich auch die Führungsgeschwindigkeit ändern kann. Die Schweißdrahtführung (6) muß diesen Bahnbewegungen folgen, wodurch sie ständig ihre Krümmung ändert und auch Torsionsbelastungen unterworfen wird. Diese Formänderungen führen zu ständig ändernden Reibungswiderständen und zu Schwingungen, die sich auf den konstanten Schweißdrahtvorschub auswirken. Dem Hauptantrieb (7), der die Geschwindigkeit des Schweißdrahtvorschubes bestimmt, soll der Draht (4) jedoch unabhängig von diesen Kräfteschwankungen stets mit möglichst konstanter Kraft und Geschwindigkeit zugeführt werden. Sobald nämlich diese Kräfte schwanken, führt das auch für den Hauptantrieb (7) zu einer Änderung der Motordrehzahl und damit zu einer Änderung der Vorschubgeschwindigkeit des Schweißdrahtes (4).

Die Transportvorrichtung (3) gleicht diese Kräfteschwankungen aus.

Hauptantrieb (7) und Hilfsantrieb (14) besitzen fremderregte Gleichstrommotoren (13, 19), die über einen Wechselstrom-Tachogenerator drehzahlgeregelt sind. Die Soll-Werte der Drehzahlen sind dabei so eingestellt, daß die Fördergeschwindigkeit des Hilfsantriebes (14) um 10 bis 40% höher ist als die Drahtvorschubsgeschwindigkeit des Hauptantriebs (7).

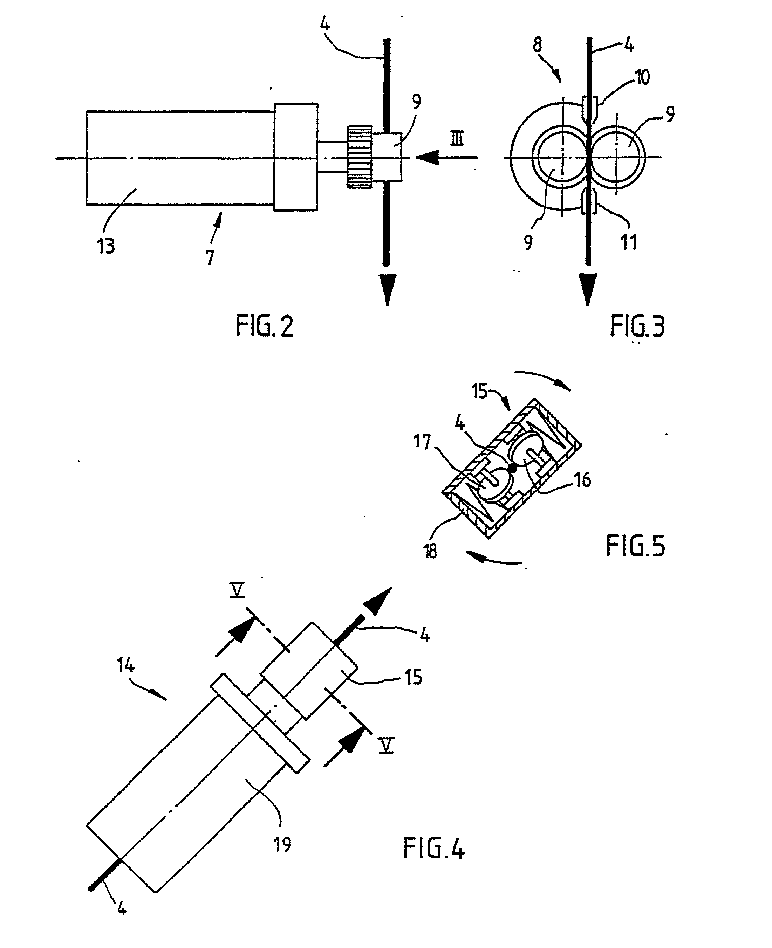

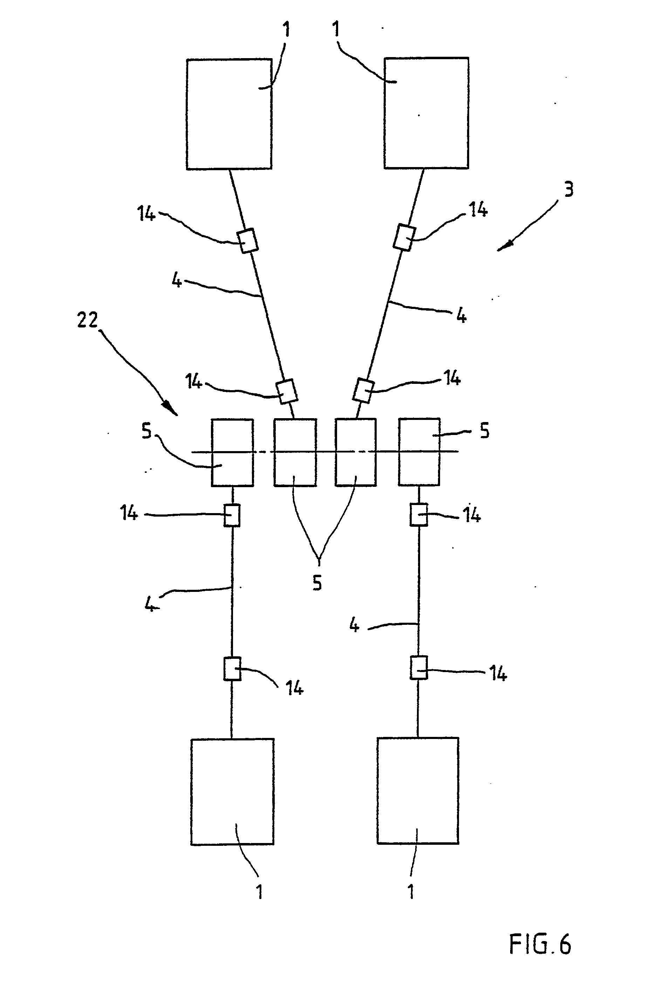

Der Hilfsantrieb (14) wirkt über ein Planetenvorschubgerät (15) (vgl. Fig. 4 und 5) auf den Schweißdraht (4) ein. Der Schweißdraht (4) wird dabei durch die hohlgebohrte Welle des Motors (19) zugeführt. Das Planetenvorschubgerät (15) besteht aus zwei Rollen (16, 17), die zwischen sich den Schweißdraht (4) im Klemmschluß halten. Die Rollen (16, 17) sind gegenüber dem Schweißdraht (4) schräg angestellt, wobei sich ihre Achsen kreuzen. Die Achsen der Rollen (16, 17) sind im Rollenhalter (18) des Planetenvorschubgerätes (15) gegenüber dem Schweißdraht (4) verstellbar und federbelastet geführt. Dadurch können die Rollen (16, 17) gegenüber dem Schweißdraht (4) radial zugestellt und angepreßt werden. Der Rollenhalter (18) des Planetenvorschubgerätes (15) wird vom Motor (19) in Rotation versetzt, wodurch die frei drehbar gelagerten Rollen (16, 17) um den Schweißdraht (4) herumbewegt werden und dabei selbst in Rotation versetzt werden. Durch diese rotierende Abwälzbewegung der schräggestellten Rollen (16, 17) wird der Schweißdraht (4) in Richtung des Pfeiles (vgl. Fig. 4) gefördert.

Das Planetenvorschubgerät (15) fördert durch seine Rollen (16, 17) den Schweißdraht (4) mit Schlupf. Die maximal übertragbare Reibkraft, d.h. die Schlupfgrenze, ist über die Federbelastung der Rollen (16, 17) einstellbar. Die Schlupfgrenze wird dabei so eingestellt, daß die aufgebrachte Reibkraft zumindest gleich, vorzugsweise aber wesentlich größer als der maximale Reibwiderstand ist, der in der Schweißdrahtführung (6) auf den Schweißdrahtvorschub einwirkt.

Das hat zur Folge, daß der Hilfsantrieb (14) unter Überwindung der schwankenden Reibungswiderstände in der Schweißdrahtführung (6) den Schweißdraht (4) dem Hauptantrieb (7) mit weitestgehend konstanter Kraft und Geschwindigkeit zuführt. Sobald beispielsweise in Strecklage der Schweißdrahtführung (6) die Widerstände minimal werden, bewirkt der Schlupf des Hilfsantriebes (14), daß die Kraft, mit der der Schweißdraht (4) dem Hauptantrieb (7) zugeführt wird, einen vorbestimmten Maximalwert nicht überschreitet und dadurch den Hauptantrieb (7) überschiebt oder den in der Schweißdrahtführung (6) mit Spiel geführten Schweißdraht (4) ausknickt und faltet. Der Schlupf des Hilfsantriebes (14) wird dazu auf die Förderverhältnisse des Hauptantriebes (7) abgestimmt.

Der Hauptantrieb (7) besitzt einen ZweirollenDrahtantrieb (8) (vgl. Fig. 2 und 3), bei dem beide Rollen (9) angetrieben sind. Der Schweißdraht (4) wird über eine Einlaßdüse (10) zwischen zwei einander gegenüberstehende Rollen (9) eingeführt, die ihn zwischen sich einklemmen und durch die Auslaßdüse (11) weiterfördern. Bei Einsatz des gezeigten Zweirollen-Drahtantriebes (8) wird die Fördergeschwindigkeitsdifferenz von Hilfsantrieb (14) und Hauptantrieb (7) auf vorzugsweise ca. 20% eingestellt.

Anstelle des vorbeschriebenen Schubbetriebes durch den schneller laufenden Hilfsantrieb (14) können die Reibkraftschwankungen auch über einen Zugbetrieb ausgeglichen werden. Der Hilfsantrieb (14) läuft dann mit einer um ca. 10 - 40% niedrigeren Fördergeschwindigkeit als der Hauptantrieb (7) und bremst dabei unter Ausgleich der Kräfteschwankungen in der Schweißdrahtführung (6) den Schweißdrahtvorschub am Hauptantrieb (7).

Fig. 6 zeigt eine Variation der Transportvorrichtung (3) gegenüber dem Ausführungsbeispiel der Fig. 1. Die Drahtrollen (5) sind für alle Schweißroboter (1) an einer zentralen Lagerstelle (22) extern bevorratet. Der Schweißdraht (4) wird den einzelnen Schweißrobotern (1) dadurch über eine längere Strecke mittels mehrerer Hilfsantriebe (14) von außen zugeführt. Die einzelnen Schweißroboter (1) besitzen aber noch einen Haupt- und einen Hilfsantrieb (7, 14) gemäß dem Ausführungsbeispiel der Fig. 1-5, in die der Schweißdraht (4) eingespeist wird.

Der Hilfsantrieb (14) am Schweißroboter (1) und die Hilfsantriebe (14) in der Transportstrecke zur zentralen Lagerstelle (22) sind vorzugsweise gleich ausgebildet und laufen mit der gleichen Drehzahl und dem gleichen Schlupf.

In Variation dazu ist es auch möglich, Drehzahl und/oder Schlupf innerhalb der Kette der Hilfsantriebe (14) abzustufen. Desgleichen können auch die einzelnen Hilfsantriebe (14) unterschiedlich ausgebildet sein, indem beispielsweise nur an einem Hilfsantrieb (14) ein Planetenvorschubgerät (15) vorhanden ist, während die übrigen Hilfsantriebe (14) andere schlupfbehaftete Antriebssysteme aufweisen.

Der Schlupf des einzelnen Hilfsantriebes (14) dient auch der Verminderung der Motorbelastungen der beiden Antriebe (7, 14).

Für eine langfristige, vor allem auch im Hinblick auf die hohen Einschaltzeiten wichtige Betriebssicherheit empfiehlt sich eine Parameterüberwachung des Schweißvorganges. Dazu werden unter anderem die Motorströme für jede Schweißnaht überwacht, wodurch die Steuerplatinen und Antriebsmotoren der Transportvorrichtung (3) selbst geschützt werden. Gleichzeitig wird dadurch auch auf den Zustand des Schweißwerkzeuges, insbesondere des Brenners und Kontaktrohres sowie den Zustand der Schweißdrahtführung (6) aufmerksam gemacht. Mit diesen Maßnahmen kann auch ein eventuelles Blockieren der Transportvorrichtung (3), z.B. durch Feststellen einer maximalen Strombelastung über eine bestimmte Zeit, signalisiert und rechtzeitig abgeschaltet werden.

**Patentansprüche**

1. Transportvorrichtung (3) für den Schweißdrahtvorschub an Schweißeinrichtungen (2), bei der der Schweißdraht (4) von einem Vorratsbehälter (5) mit Hilfe mindestens zweier drehzahlgeregelter Antriebe (7, 14) über eine Drahtführung (6) gefördert wird, wobei der den Vorschub bestimmende und ohne Schlupf am Schweißdraht (4) angreifende Hauptantrieb (7) nahe der Schweißdüse (12) und ein oder mehrere Hilfsantriebe (14) jeweils mit Abstand dahinter angeordnet sind, dadurch gekennzeichnet, daß die Antriebe (7, 14) auf konstante Drehzahl geregelt und dabei auf unterschiedliche Fördergeschwindigkeiten eingestellt sind, wobei der Hilfsantrieb (14) einstellbar federnd gelagerte Antriebselemente (16, 17) zur Begrenzung der Schubkraft aufweist.

2. Transportvorrichtung nach Anspruch 1, dadurch gekennzeichnet, daß beide Antriebe (7, 14) tachogeregelte, fremderregte Gleichstrommotoren (13, 19) aufweisen.

3. Transportvorrichtung nach Anspruch 1 oder einem der folgenden, dadurch gekennzeichnet, daß der Hilfsantrieb (14) ein Planetendrahtvorschubgerät (15) mit einstellbar federnd gelagerten Rollen (16, 17) aufweist, während der Hauptantrieb (7) als Zweirollen-Drahtantrieb (8) ausgebildet ist, bei dem vorzugsweise beide Rollen (9) angetrieben werden.

4. Transportvorrichtung nach Anspruch 1 oder einem der folgenden, dadurch gekennzeichnet, daß der Hilfsantrieb (14) eine um zehn bis vierzig Prozent höhere Fördergeschwindigkeit als der Hauptantrieb (7) aufweist.

5. Transportvorrichtung nach Anspruch 1 oder einem der folgenden, dadurch gekennzeichnet, daß der Hauptantrieb (7) an einer Hand (21) und den Hilfsantrieb (14) an einer Schwinge (20) eines mehrachsigen Industrieroboters (1) angeordnet sind.

6. Transportvorrichtung nach Anspruch 5, dadurch gekennzeichnet, daß der Vorratsbehälter (5) für den Schweißdraht (4) extern und mit Abstand zum Industrieroboter (1) angeordnet ist und daß der Schweißdraht (4) dem Industrieroboter (1) über mehrere Hilfsantriebe (14) mit gegenseitig abgestuften Drehzahlen und/oder Schlupf zugeführt wird.

## Claims

1. Transport apparatus (3) for feeding welding wire to welding apparatuses (2), in which the welding wire (4) is conveyed from a reservoir (5) with the aid of at least two speed-controlled drives (7, 14) via a wire guide (6), the main drive (7) determining feedrate and acting without slip on the welding wire (4) being arranged close to the welding orifice (12) and one or more auxiliary drives (14) each being arranged spaced behind it, characterized in that the drives (7, 14) are controlled at constant rotational speed and at the same time are set to differing conveying speeds, the auxiliary drive (14) having driving elements (16, 17) which are mounted adjustably resiliently to limit the feeding force.

2. Transport apparatus according to Claim 1, characterized in that both drives (7, 14) have tachometer-controlled, externally excited d.c. motors (13, 19).

3. Transport apparatus according to Claim 1 or to one of the following, characterized in that the auxiliary drive (14) has a planetary wire-feed device (15) with rollers (16, 17) mounted adjustably resiliently, while the main drive (7) is constructed as a two-roller wire drive (8) in which preferably both rollers (9) are driven.

4. Transport apparatus according to Claim 1 or to one of the following, characterized in that the auxiliary drive (14) has a conveying speed which is ten to forty per cent higher than that of the main drive (7).

5. Transport apparatus according to Claim 1 or to one of the following, characterized in that the main drive (7) is arranged on a hand (21) and the auxiliary drive (14) on an oscillator (20) of a multiple-axis industrial robot (1).

6. Transport apparatus according to Claim 5, characterized in that the reservoir (5) for the welding wire (4) is arranged externally and spaced from the industrial robot (1), and in that the welding wire (4) is supplied to the industrial robot (1) by way of a plurality of auxiliary drives (14) with mutually stepped speeds and/or slip.

## Revendications

1. Dispositif de transport (3) pour l'avance du fil à souder d'installations de soudage (2), dans lequel le fil à souder (4) est transporté d'un réservoir de réserve (5), à l'aide d'au moins deux dispositifs d'entraînement (7, 14) à vitesse de rotation réglée, par l'intermédiaire d'un dispositif de guidage de fil (6), le dispositif d'entraînement principal (7), déterminant l'avance et attaquant le fil à souder (4) sans glissement, étant monté à proximité de la buse de soudage (12) et un ou plusieurs dispositifs d'entraînement auxiliaire (14) étant monté en aval et à distance, caractérisé en ce que les dispositifs d'entraînement (7, 14) sont réglés à une vitesse de rotation constante et sont réglés à des vitesses de transport différentes, le dispositif d'entraînement auxiliaire (14) comportant des éléments d'entraînement (16, 17) montés réglables élastiquement pour limiter la force de glissement.

2. Dispositif de transport selon la revendication 1, caractérisé en ce que les deux dispositifs d'entraînement (7, 14) comportent des moteurs à courant continu (13, 19) à réglage tachymétrique et à excitation indépendante.

3. Dispositif de transport selon la revendication 1 ou l'une des suivantes, caractérisé en ce que le dispositif d'entraînement auxiliaire comporte un appareil d'avance de fil (15) planétaire à galets (16, 17) montés réglables élastiquement, tandis que le dispositif principal d'entraînement (16) est constitué sous la forme d'un dispositif d'entraînement de fil à deux galets (8), dans lequel de préférence les deux galets (9) sont moteurs.

4. Dispositif de transport selon la revendication 1 ou l'une des suivantes, caractérisé en ce que le dispositif d'entraînement auxiliaire (14) a une vitesse de transport plus élevée de 10 à 40% que le dispositif d'entraînement principal (7).

5. Dispositif de transport selon la revendication 1 ou l'une des suivantes, caractérisé en ce que le dispositif d'entraînement principal (7) est monté sur un poignet (21) et le dispositif d'entraînement auxiliaire (14) sur un bras oscillant (20) d'un robot industriel (1) à plusieurs axes.

6. Dispositif de transport selon la revendication 5, caractérisé en ce que le réservoir de réserve (5) du fil à souder (4) est monté à l'extérieur et à distance du robot industriel (1) et en ce que le fil à souder (4) est amené au robot industriel (1) par plusieurs dispositifs d'entraînement auxiliaires (14) à vitesse de rotation et/ou à glissement mutuellement échelonnés.

FIG. 1

FIG. 2

FIG. 3

FIG. 5

FIG. 4

FIG.6